# EUROPEAN PATENT APPLICATION

(11) **EP 4 521 633 A1**
(43) Date of publication of application: **12.03.2025**
(21) Application number: 23799602.0
(22) Date of filing: 21.04.2023
(51) Int. Cl.: H02S 20/30, H02S 40/22, H02S 30/10

(54) **SOLAR CONCENTRATION APPARATUS CAPABLE OF ADJUSTING ANGLE OF LIGHT CONCENTRATOR BY USING SLIDING STRUCTURE**

(30) Priority: 06.05.2022 KR 20220056086
(71) Applicant: Kim, Jung Hee, Goyang-si, Gyeonggi-do 10371 (KR)
(72) Inventor: Kim, Jung Hee, Goyang-si, Gyeonggi-do 10371 (KR)
(74) Representative: Zaboliene, Reda
(86) International application number: PCT/KR2023/005501
(87) International publication number: WO 2023/214719

(57) **Abstract**

The present invention relates to a solar concentration apparatus capable of adjusting the angle of a light concentrator by using a tilting portion having a slidable structure. In the present invention, when one arm structure of the tilting portion slidably moves along a slide frame portion, another arm structure induces a tilting movement for adjusting the angle of the light concentrator while slidably moving on the rear surface of the light concentrator. At the same time, the angle of a reflecting mirror reflecting parallel light is automatically adjusted according to a variation in the angle due to the sliding movement of the tilting portion. Therefore, according to the structure of the present invention, the tilting movement of the light concentrator may be carried out based on the diameter of the incident light reflecting mirror as a central axis. Accordingly, an area that is necessary for tilting the light concentrator can be noticeably reduced, and miniaturization and high integration of the apparatus are possible. Also, as the number of materials and movement of the materials for light concentration can be minimized, the apparatus can be light weight. **In** addition, a cleaning portion is installed outside so that an operator does not need to carry out a cleaning operation and move for the cleaning, and thus, excellent operating convenience and reliability can be obtained. Also, the apparatus is economically efficient due to low manufacturing and maintenance costs.

## Description

### Technical Field

The present invention relates to a solar concentration device that uses a sliding structure to adjust the concentration unit's angle. Specifically, it relates to a solar concentration device that applies a slidable structure to the tilting unit to minimize the surface area required for the tilting motion of the concentration unit.

### Background Technology

A solar concentration device refers to a device that tracks the sun to concentrate sunlight and deliver the light to a certain point. Solar concentration technology is gaining attention for its high efficiency and eco-friendliness, as it allows solar energy, a type of new renewable energy, to be used without an energy conversion process.

With urban buildings becoming increasingly tall and concentrated, there has been a growing number of sunlight-related problems. The use of solar concentration technology can solve these problems, as it efficiently delivers sunlight to indoor spaces that sunlight can't easily reach. For example, a solar concentration device may be effectively adopted for various types of natural lighting, including indoor lights and grow lights.

To develop a high-efficiency solar concentration device, it is crucial for the concentration unit to perform precise tilting motions in response to changes in the sun's position. Also, to make the device lighter, smaller, highly integrated, and economical, the surface area required for the concentration unit's tilting motion, as well as the movement and the number of materials required to operate the device, need to be minimized.

An example of a conventional solar concentration device, Korean Patent Gazette No. 10-0515400, which relates to a device for securing sunlight using a solar concentration device, discloses a device that reflects sunlight for the second time to concentrate light and transmits it via optical fibers. However, methods using optical fibers have a shortcoming in requiring expensive connection materials and optical fibers and a complicated installation process.

Korean Patent Gazette No. 10-1770311 discloses a solar concentration device that reflects sunlight at least twice on the inside to concentrate light and reflects the concentrated light on a mirror so it can be directed to the light path. Nevertheless, since in such a concentration device, the concentration unit's central axis of tilting is positioned outside the concentration unit, it requires a broad surface area for the concentration unit to perform tilting motion, posing difficulties in the miniaturization and high integration of the device. Furthermore, although the device is advantageous regarding costs and installation as it uses a reflector, not optical fibers, to transmit sunlight, there still remains the problem that it requires complicated control signals and a lot of electricity to change the reflection unit's angle while the concentration unit performs tilting motion.

Consequently, in the case of a solar concentration device that uses reflectors for transmission, it is necessary to develop a new technology that improves concentration efficiency, lowers manufacturing costs, and enables the lightening, miniaturization, and high integration of the device.

### Detailed Description of Invention

### Technical Problems

The purpose of the present invention is to provide a solar concentration device that has high concentration efficiency, can be light, small, and highly-integrated, and requires low manufacturing and maintenance costs.

### Means for Solving Technical Problems

To achieve this purpose, the present invention provides a solar concentration device that includes a concentration unit that collects sunlight, converts it into parallel light, and delivers the parallel light to the parallel light reflection unit; a tilting unit that adjusts the concentration unit's angle and includes two arm structures connected to one another through a hinge structure; a parallel light reflection unit that is connected to the tilting unit with a hinge and reflects the parallel light delivered from the concentration unit onto the transmission unit; a slide frame unit to which the tilting unit is slidably attached; and a transmission unit that transmits the light reflected by the parallel light reflection unit to the outside to output sunlight.

In the present invention, the tilting unit may include a first arm structure slidably attached to the concentration unit at the rear of the concentration unit; and a second arm structure slidably attached to the slide frame unit.

In the present invention, the concentration unit may include an incident light reflector that includes a first parabolic mirror to concentrate sunlight; a concentration reflector that is positioned to face the mirror of the incident light reflector that includes a second parabolic mirror to reflect the light concentrated by the incident light reflector toward the through-hole to deliver the parallel light to the parallel light reflection unit.

In the present invention, the concentration unit may also include a reflector-connecting means that connects the incident light reflector and the concentration reflector; and a tilting-unit-connecting means that is formed at the rear of the incident light reflector and to which the first arm structure is slidably attached.

In the present invention, the concentration unit may also include an optical sensor that detects sunlight.

In the present invention, the solar concentration device connects the tilting unit with the parallel light reflection unit, and may also include a tilting adjustment unit that makes the angle of the parallel light reflection unit match the angle at which parallel light is delivered to the transmission unit, according to the sliding of the tilting unit.

In the present invention, the parallel light reflection unit may include a parallel light reflector that is connected to the tilting unit through a hinge structure and reflects the parallel light onto the transmission unit; two extension rods extending parallelly from one end of the parallel light reflector; and a slide rod slidably attached along the two extension sticks.

In the present invention, the tilting adjustment unit connects at least one of the tilting unit and the concentration unit to the slide rod through a hinge structure, thereby ensuring that the angle of the parallel light reflection unit remains the same as the angle at which the parallel light is delivered to the transmission unit.

In the present invention, the transmission unit may include one or more reflectors to transmit the light reflected by the parallel light reflection unit toward the output direction.

In the present invention, the solar concentration device may also include a driving unit for tilting motion that responds to changes in the sun's altitude and for rotational motion that responds to changes in the sun's position.

In the present invention, the solar concentration device may also include a transparent case covering the upper part of the device; and a protective frame unit that supports the transparent case and includes a supporting frame that covers the lower part of the device.

In the present invention, the solar concentration device is rotatably attached to the outside of the transparent case and may also include a cleaning unit for cleaning the transparent case.

### Advantageous Effects of Invention

The solar concentration device according to the present invention may be designed to use a slidable tilting unit to allow the concentration unit to perform tilting motion using the diameter of the incident light reflector as the central axis. Consequently, the use of the present invention dramatically reduces the surface area required for tilting the concentration unit, enabling the miniaturization and high integration of the device. In addition, it minimizes the number of materials and movements required for concentration, leading to lightweight devices, convenient and stable operation, and economic advantages such as low manufacturing and maintenance costs.

### Brief Description of Drawings

Figure 1 illustrates a simplified structure of the solar concentration device according to one embodiment of the present invention.
Figure 2 illustrates a front perspective view of the concentration unit in the solar concentration device according to one embodiment of the present invention.
Figure 3 illustrates a rear perspective view of the incident light reflector in the solar concentration device according to one embodiment of the present invention.
Figure 4 illustrates a front perspective view of the concentration reflector in the solar concentration device according to one embodiment of the present invention.
Figure 5 illustrates the rear structure of the concentration reflector in which an optical sensor is installed, in the solar concentration device according to one embodiment of the present invention.
Figure 6 illustrates a perspective view of the tilting unit in the solar concentration device according to one embodiment of the present invention.
Figure 7 illustrates the structure of the tilting unit to which a parallel light reflection unit is attached, in the solar concentration device according to one embodiment of the present invention.
Figure 8 illustrates the connecting structure of the tilting unit and the parallel light reflection unit in the solar concentration device according to one embodiment of the present invention.
Figure 9 illustrates the change in the angle of the concentration unit and the parallel light reflection unit and the change in the movement of the tilting adjustment unit caused by the sliding of the tilting unit in the solar concentration device according to one embodiment of the present invention.
Figure 10 illustrates a cross-sectional view of the transmission unit to which a slide frame unit is fixed, in the solar concentration device according to one embodiment of the present invention.
Figure 11 illustrates a simplified structure of the solar concentration device that includes a driving unit according to one embodiment of the present invention.
Figure 12 illustrates a simplified structure of the solar concentration device that includes an inner frame unit according to one embodiment of the present invention.
Figure 13 illustrates a simplified structure of the solar concentration device in which the gear of the rotation module is formed at the lower surface of the lower frame according to one embodiment of the present invention.
Figure 14 illustrates a simplified structure of the protective frame unit formed on the solar concentration device according to one embodiment of the present invention.
Figure 15 illustrates a simplified structure of the transparent case to which a cleaning unit is attached, in the protective frame unit according to one embodiment of the present invention.
Figure 16 illustrates a simplified structure of the cleaning unit's hinge in which a cleaning module and an assisting cleaning module are installed according to one embodiment of the present invention.
Figure 17 illustrates front and rear perspective views of the solar concentration device according to an exemplary embodiment of the present invention.

### Best Mode for Carrying Out Invention

Hereinafter, specific embodiments of the present invention will be described in detail. Unless defined otherwise, all technological and scientific terms used in the present specification have the same meaning as how they are commonly understood by skilled professionals in the art to which the present invention belongs. In general, the nomenclature used in the present specification is well-known and commonly used in the art.

The present invention relates to a solar concentration device that can easily adjust the angle of the concentration unit by using a sliding method.

Specifically, in the present invention, the tilting unit may be designed as a sliding structure so that the tilting motion of the concentration unit can be carried out using the diameter of the incident light reflector as the central axis. Consequently, the present invention enables a dramatic decrease in the surface area required for the tilting of the concentration unit and therefore has the advantage that it enables the miniaturization and high integration of the device. In addition, it minimizes the number of materials and movements required for concentration, leading to lightweight devices, convenient and stable operation, and economic advantages such as low manufacturing and maintenance costs.

In describing the present invention, the tilting motion of the concentration unit refers to the motion by which the concentration unit's angle is adjusted to track sunlight in response to changes in the sun's altitude, and the axis that serves as the center of this angle adjustment is referred to as the central axis of tilting. **In** the present invention, the tilting motion of the concentration unit is described based on the adjustment of the reflected angle of the incident light reflector in the concentration unit, that is, the tilting motion of the incident light reflector. The tilting angle of the concentration unit is the angle at which the incident light reflector performs tilting motion due to an increase in the sun's altitude, and the angle at which the incident light reflector is positioned in a vertical direction to the bottom surface of the device will be described as 0°.

In describing the present invention, the rotational motion of the device is motion that tracks sunlight in response to changes in the sun's position and refers to rotating around the axis that is vertical to the bottom surface of the device. Since, in a solar concentration device, the concentrated sunlight is output to one focus area, the central axis of the device's rotation may be the same as the central axis of the final output path.

As the sun rises in the east and sets in the west, the rotating angle needs to be at least 180_{∘}, and for the solar concentration device to track changes in the sun's altitude while rotating, tilting motion that tracks the sun from 0° to 90° is required.

In the present invention, the tilting motion of the concentration unit and the rotational motion of the device occur on the vertical central axis of the device, thereby minimizing the movement to track sunlight. Therefore, the use of the present invention enables the miniaturization and lightening of the solar concentration device and the reduction of manufacturing and maintenance costs.

Hereinafter, the structure of the solar concentration device according to embodiments of the present invention will be described in detail in reference to drawings. The embodiments explained with drawings do not limit the scope of the present invention but are provided to explain the present invention to those of ordinary skill in the art. The same reference numerals in the drawings refer to the same components, and the size or thickness of each component may be exaggerated for the clarity of the description.

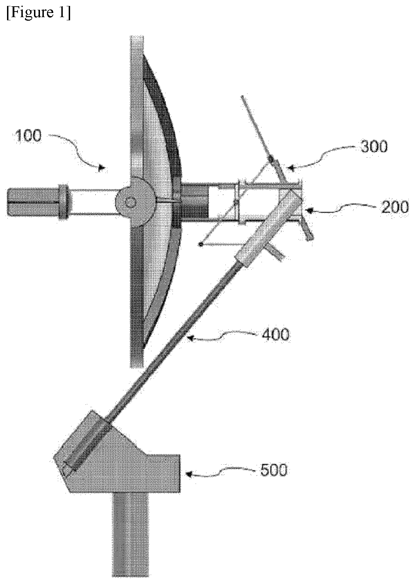

Figure 1 illustrates a simplified structure of the solar concentration device according to one embodiment of the present invention.

Referring to Figure 1, the solar concentration device according to one embodiment of the present invention may include a concentration unit that concentrates the incident sunlight as high-density parallel light (100); a tilting unit (200) that adjusts the angle of the concentration unit (100) through sliding; a parallel light reflection unit (300) that is connected to the tilting unit (200) through a hinge structure and reflects the high-density parallel light; a slide frame unit (400) to which the tilting unit (200) is slidably attached; and a transmission unit(500) to which the slide frame unit (400) is fixed, and receives and transmits the light reflected by the parallel light reflection unit (300).

In the present invention, the role of the concentration unit (100) is to collect the incident sunlight, convert it into parallel light, and deliver the parallel light to the parallel light reflection unit (300).

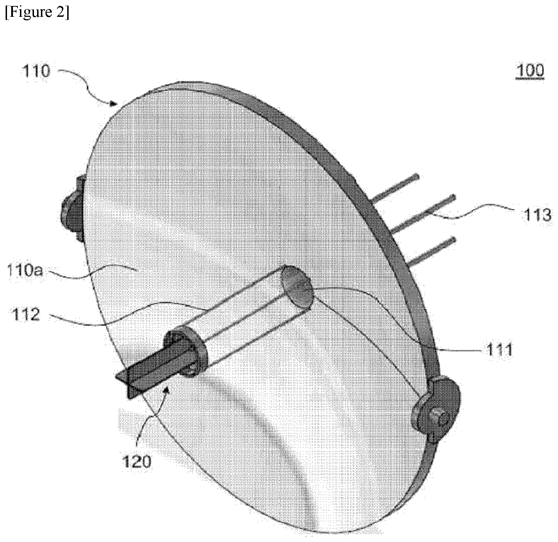

Figure 2 is a front perspective view of the concentration unit according to one embodiment of the present invention, and the concentration unit (100) may include an incident light reflector (110) that has a first parabolic mirror; and a concentration reflector (120) that is positioned to face the mirror of the incident light reflector and has a second parabolic mirror. A parabolic mirror refers to a mirror with a parabolic reflective surface, and in the present invention, the first parabolic mirror may be in the form of a concave mirror and the second parabolic mirror may be in the form of a convex mirror.

In the structure, the incident sunlight may be reflected onto the concentration reflector (120) by the parabolic mirror (110a)
of the incident light reflector (110), and the reflected light may be concentrated as high-density parallel light by the parabolic structure of the concentration reflector (120). The parallel light travels toward the rear of the incident light reflector (110) and is delivered to the parallel light reflection unit (300) via the through-hole (111) formed at the center of the incident light reflector. In the structure, the outer peripheral surface of the concentration reflector (120) and the outer peripheral surface of the incident light reflector (110) may be parallelly positioned so that the high-density parallel light can efficiently pass through the through-hole (111).

In the present invention, the incident light reflector (110) and the concentration reflector (120) may be fixedly connected through the reflector-connecting means (112). Specifically, the outer peripheral surface of the concentration reflector (120) may be connected to the incident light reflector (110) through one or more reflector-connecting means (112). For example, the reflector-connecting means (112) may connect the outer peripheral surface of the concentration reflector (120) and the through-hole (111), or the outer peripheral surface of the concentration reflector (120) and the outer peripheral surface of the incident light reflector (110). When the reflector-connecting means (112) is formed to connect the outer peripheral surface of the concentration reflector (120) and the through-hole (111), no shadow will be cast on the incident light reflector (110), which is preferable.

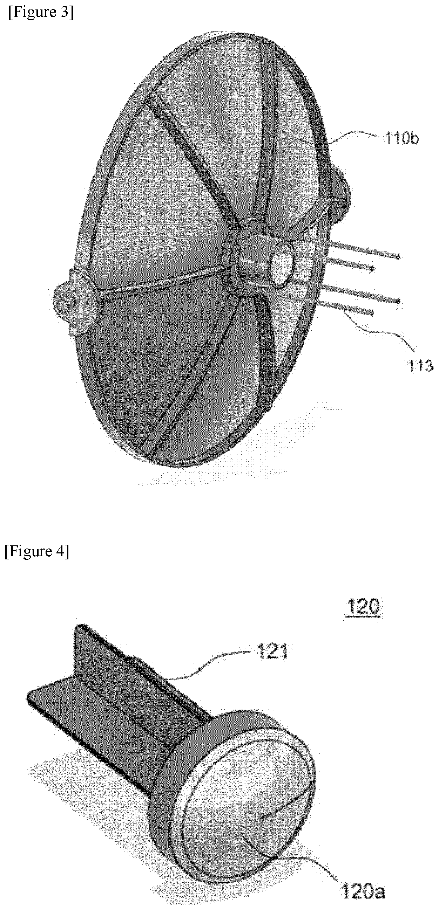

Figure 3 is a rear perspective view of the incident light reflector (110) according to one embodiment of the present invention, and one or more tilting-unit-connecting means (113) may be formed at the rear(110b) of the incident light reflector (110). The tilting-unit-connecting means (113) is a part to which the first arm structure (200) of the tilting unit, which will be described later, is slidably attached, and this structure allows the sliding of the tilting unit (200) and the tilting motion of the incident light reflector (110) to occur organically.

In one embodiment of the present invention, the concentration unit (100) may additionally include an optical sensor that detects sunlight. When the sun changes its position, the optic sensor determines the appropriateness of tracking and provides feedback, enabling more precise tracking of sunlight and efficient concentration.

Figure 4 illustrates the structure of the concentration reflector according to one embodiment of the present invention,
and the concentration reflector (120) has a parabolic mirror in the shape of a convex mirror (120a) at the front to reflect the light reflected by the mirror of the incident light reflector (110) toward the through-hole (111), thereby delivering it to the parallel light reflection unit (300). The parabolic mirror (120a) of the concentration reflector (120) has a structure that corresponds to the parabolic mirror (110a) of the incident light reflector (110) so that it can reflect the incident light reflected at various angles by the parabolic mirror (110a) of the incident light reflector (110a) as parallel light traveling in one direction. In addition, a supporting means (121) that supports other members may be formed at the rear of the concentration reflector (120).

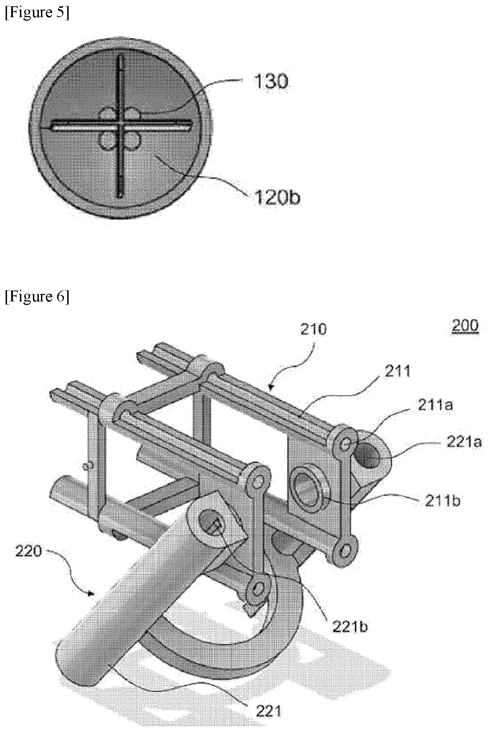

In an exemplary embodiment of the present invention, an optical sensor may be formed at the rear of the concentration reflector. Figure 5 illustrates the rear structure of the concentration reflector in which an optical sensor is formed at the rear, and one or more optical sensors (130) may be installed at the center of the rear of the concentration reflector(120b). Here, the signal of the optical sensor (130) may be designed to be delivered via the reflector-connecting means that connects the concentration reflector and the incident light reflector.

In the present invention, the solar concentration device includes a tilting unit (200) that adjusts the angle of the concentration reflector (100) to track changes in the sun's altitude.

In the present invention, by using a slidable tilting unit, the concentration unit (100) may be designed to perform tilting motion using the diameter of the incident light reflector (110) as the central axis, according to the sliding of the tilting unit. Accordingly, the use of the present invention reduces the surface area required for the tilting of the concentration unit (100) to a dramatic extent and allows devices to be created in simple structures, thereby enabling the lightening and miniaturization of devices, convenient and stable operation, and the reduction of manufacturing and maintenance costs.

Figure 6 illustrates a prospective view of the tilting unit according to one embodiment of the present invention. As illustrated in Figure 6, the tilting unit (200) may include two arm structures (210, 220) connected through a hinge structure. Specifically, the tilting unit (200) may include a first arm structure (210) slidably attached to the tilting-unit-connecting means (113) of the concentration unit (100) and a second arm structure (220) slidably attached to the slide frame unit (400).

**In** the present invention, the first arm structure (210) may include two or more parallel slide arms (211), which may be connected with a connecting member. The slide arms (211) of the first arm (210) have a hole (211a) on the inside into which the tilting-unit-connecting means (113) may be inserted, and hinge linkers (211b) for attaching the second arm structure (220) and the parallel light reflection unit (not drawn) to the inside and outside, respectively, may be formed.

**In** the present invention, the second arm structure (220) may include two or more parallel slide arms (221), and one or more connecting members (222) that connect the slide arms. The slide arms (221) of the second arm structure (220) have a hole (221a) on the inside into which the slide frame unit may be inserted, and may have hinge linkers (221b) on the inside.

**In** the structure, when the second arm structure (220) slides vertically along the slide frame unit (400), the angle of the first arm structure (210) is organically adjusted, allowing the concentration unit (100) to perform tilting motion using the diameter of the incident light reflector parallel to the bottom surface of the device as the central axis.

**In** the present invention, the solar concentration device includes a parallel light reflection unit (300) that reflects high-density parallel light that has passed through the through-hole of the concentration unit. The parallel light reflection unit comprises materials capable of reflecting light and preferably includes a reflector that has a mirror on one side. **In** addition, the upper part of the parallel-light reflector may include two parallelly extending extension rods and a slide rod slidably attached along the two extension rods.

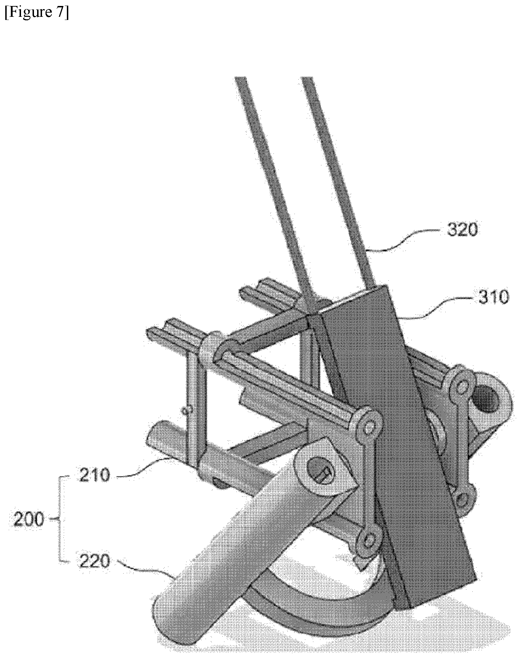

**In** the present extension, the parallel light reflection unit may be attached to the inside of the tilting unit through a hinge structure. Figure 7 illustrates a perspective view of the tilting unit to which a parallel light reflection unit is attached, and referring to this drawing, the parallel light reflection unit (300) may be attached to the first arm structure (210) of the tilting unit (200) through a hinge structure and have a double-hinge structure in which the first arm structure (210) is attached to the second arm structure (220) through a hinge structure.

In the solar concentration device of the present invention, if the concentration unit performs tilting motion in response to changes in the sun's altitude, the device's angle changes to the traveling angle of the high-density parallel light. Consequently, for the high-density parallel light to be evenly delivered to the transmission unit, the angle of reflecting the parallel light should also be organically adjustable according to the sliding of the tilting unit.

Therefore, a tilting adjustment unit may be formed to connect the tilting unit and the parallel light reflection unit so that the angle of the parallel light reflection unit can remain the same as the angle at which the parallel light is delivered to the transmission unit according to the sliding of the tilting unit. The tilting adjustment unit may be formed to ensure that the acute angle formed by the first arm structure and the parallel light reflection unit matches the acute angle formed by the parallel light reflection unit and the second arm structure, regardless of angle adjustments due to tilting motion.

In the present invention, the tilting adjustment unit may have a structure that connects at least one of the tilting unit and the concentration unit to the slide rod of the parallel light reflection unit through a hinge structure. Accordingly, when the angle of the tilting unit and the concentration unit is adjusted, the slide rod of the parallel light reflection unit will also slide to adjust the angle of the parallel light reflector so that the parallel light can be evenly delivered to the transmission unit.

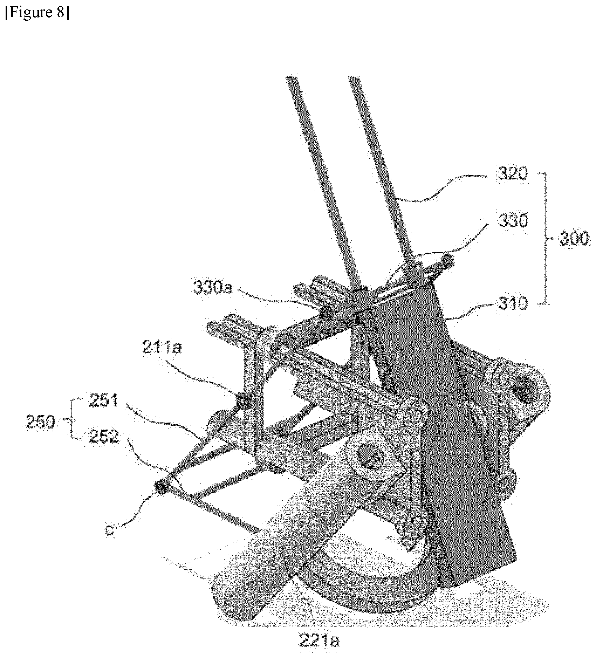

Figure 8 illustrates the connecting structure of the tilting unit and the parallel light reflection unit according to one embodiment of the present invention. Referring to Figure 8, the parallel light reflection unit (300) may include a parallel light reflector (310) that is connected to the tilting unit (200) through a hinge structure and reflects high-density parallel light toward the transmission unit (500); two extension rods (320) parallelly extending at the top of the parallel light reflector (310), and a slide rod (330) that is slidably attached along the two extension rods (320).

In an exemplary embodiment of the present invention, the tilting adjustment unit (250) may be designed to connect the slide rod (330), the first arm structure (210), and the second arm structure (220) to the tilting adjustment unit (250) at different points, and to enable the straight rod that passes through the connection points on the slide rod(330) and the first arm structure (210), and the straight rod that passes through the connection points on the slide rod (330) and the second arm structure (220) to intersect at the connection point on the slide rod (330) and be connected through a hinge structure.

In a preferred embodiment of the present invention, the tilting adjustment unit (250) may be designed to connect the slide rod (330), the first arm structure (210), and the second arm structure (220) to the tilting adjustment unit (250) at different points, and to enable the straight rod that passes through the connection points on the slide rod(330) and the first arm structure (210), and the straight rod that passes through the connection point on the second arm structure (220) to intersect and be connected through a hinge structure. Here, the imaginary fixed points positioned toward the slide frame unit (400) form an imaginary rectangle with the tilting adjustment unit (250), traveling downward following the tilting motion. The structure is advantageous in that it lengthens the sliding distance, enabling precise control.

In the present invention, the tilting adjustment unit (250) may have a structure in which two parallel rod structures meet one another.

Specifically, the two parallel rod structures may be distinguished and referred to as a first parallel rod structure (251) and a second parallel rod structure (252), and the first parallel rod structure (251) and the second parallel rod structure (252) may be connected with a hinge structure at the intersection points (c, c') where there ends meet.

In the present invention, each of the parallel rods of the first parallel rod structure (251) may have three connection points and be attached to connect the slide rod (330) of the parallel light reflection unit (300), the first arm structure (210), and the parallel rods' intersection point(c) at each of the connection points. Specifically, one of the rods of the first parallel rod structure (251) may be attached to connect one end (330a) of the slide rod (330), one edge (211a) of the slide arms (211) of the first arm structure, and the intersection point of the parallel rods' intersection point(c) in a straight line, and another rod parallel to the above-stated rod may be attached to connect the symmetrical points on the opposite side.

In the present invention, each of the parallel rods of the second parallel rod structure (252) may have two connection points, which may connect the second arm structure (220) and the parallel rods' intersection point (c). Specifically, one of the rods of the second parallel rod structure (252) may be attached to connect one edge (221a) of the slide arms (221) of the second arm structure (220) and the parallel rods' intersection point(c) in a straight line, and another rod parallel to the above-stated rod may be attached to connect the symmetrical points on the opposite side.

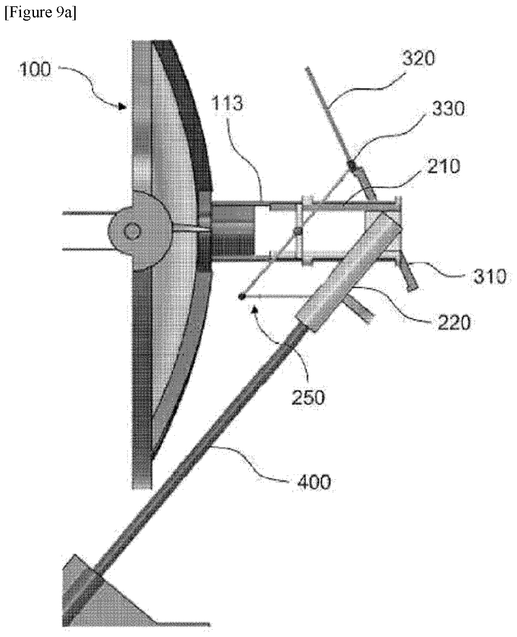

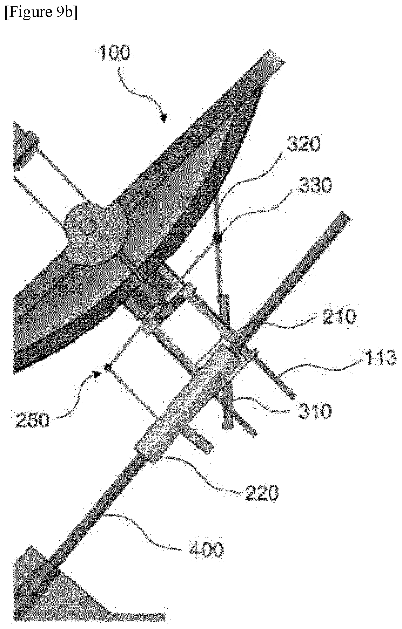

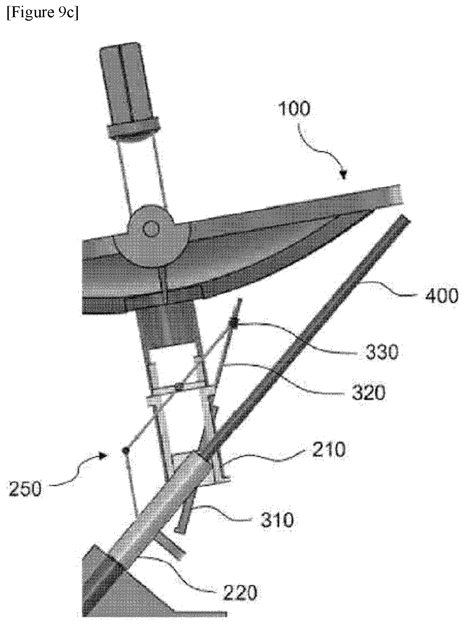

Figure 9 illustrates the change in the concentration unit and the parallel light reflection unit and the change in the tilting unit's movement caused by the sliding of the tilting unit.

In the structure of the present invention, when the second arm structure (220) of the tilting unit (200) slides along the slide frame unit (400), the first arm structure (210) slides along the tilting-unit-connecting means (113) of the concentration unit (100), and the slide rod (330) of the parallel light reflection unit (300) slides along the extension rod (320). As a result, the angle of the concentration unit (100), the tilting unit (200), and the parallel light reflector (310) is organically adjusted so it can remain the same as the angle at which the parallel light is delivered to the transmission unit (500).

Specifically, Figure 9 (a) illustrates a state diagram of the concentration unit (100) tilted by 0°, whereas (b) and (c) illustrate state diagrams of the concentration unit tilted by 50° and 80°, respectively. Referring to Figure 9, it can be observed that when the tilting unit (200) performs sliding motion and the concentration unit (100) performs tilting motion, the tilting adjustment unit (250) causes the slide rod (330) to slide along the extension rod (320), changing the angle of the parallel light reflector (310) as well. The structure is designed to ensure that the acute angle that the parallel light delivered from the concentration unit (100) to the parallel light reflector (310) forms with the parallel light reflector (310) matches the acute angle that the parallel light reflector (310) forms with the slide frame unit (400). Consequently, even if the tilting motion of the concentration unit (100) changes the direction of the high-density parallel light, the light can be delivered to the transmission unit (500) at a uniform angle.

The solar concentration device of the present invention includes a slide frame unit (400) to which a tilting unit (200) can be slidably attached. The slide frame unit serves as a frame attached to enable the sliding of the slide arms (221) of the second arm structure (220) of the tilting unit (200), and may include two parallel frame lines and be fixed to form a certain angle with the bottom surface.

In the present invention, to prevent colliding with the concentration unit (100), the slide frame unit (400) may be designed to form a 40 to 60-degree angle, preferably a 45 to 55-degree angle, with the bottom surface. The frame lines may have the form of rods or rails, and the use of rods is preferred considering that they can withstand a large number of slides and are low-cost.

The solar concentration device of the present invention includes a transmission unit (500) that receives and transmits the light reflected by the parallel light reflection unit (300). The transmission unit (500) reflects the light reflected by the parallel light reflection unit (300) on the inside to transmit it to the outside, and may serve as a support for the device that secures the slide frame unit (400).

Here, the outside area to which the sunlight is transmitted may be a place in need of sunlight, such as the inside of a building, a basement, or an indoor greenhouse. Accordingly, the solar concentration device of the present invention may be used as an indoor or underground light or a grow light.

The transmission unit (500) may have one end of the slide frame unit (400) fixed to the outside
and have a closed path on the inside to allow light to travel while minimizing its loss. Preferably, the inside of the transmission unit (500) may be treated with a metal mirror.

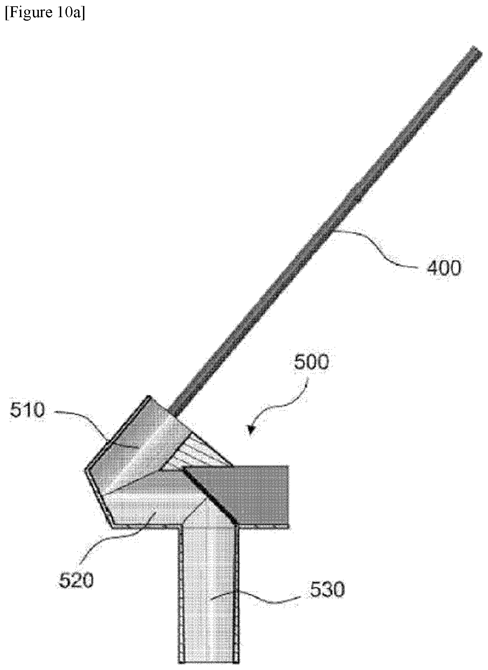

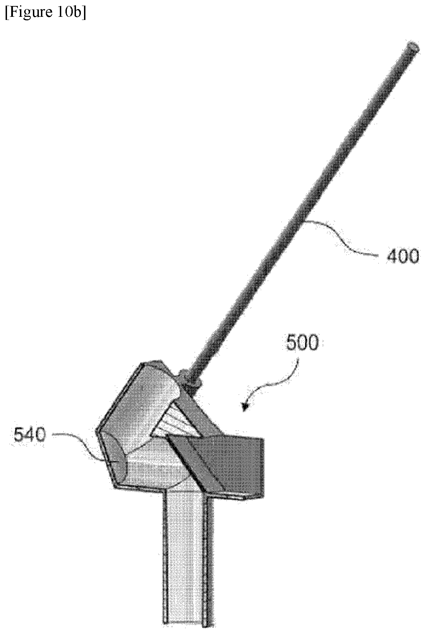

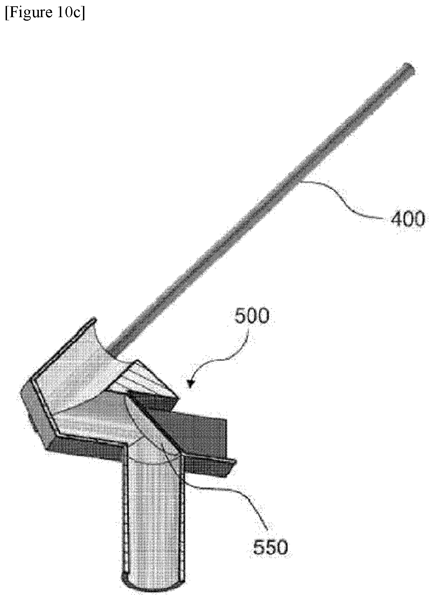

Figure 10 illustrates a cross-sectional view of the transmission unit to which a slide frame unit is fixed according to one embodiment of the present invention.

Referring to Figure 10 (a), the frame lines of the slide frame unit (400) are fixed to each side of the outer surface of the transmission unit (500). The transmission unit (500) may include a light entry path (510) that receives the light reflected by the parallel light reflector (310); a transmission path that transmits the received light (520); and an output path that outputs the transmitted light (530).

In addition, the inside of the transmission unit (500) may include one or more reflectors that direct the path of the light reflected by the parallel light reflector (310), toward the output direction. Figure 10 (b) and (c) illustrates a cross-sectional perspective view of the transmission unit, and the inside of the transmission unit (500) may include a first inner reflector (540) that reflects the light received via the light entry path (510) toward the transmission path (520) and a second inner reflector (550) that reflects the light reflected by the first inner reflector (540) toward the output path (530), and depending on the structural need of the geography or the attached position, may include another reflector.

In the present invention, the solar concentration device may perform rotational motion clockwise or anticlockwise, using the diameter of the incident light reflector vertical to the bottom surface of the device as the central axis. According to the rotational motion, the concentration unit may be designed to respond to changes in the sun's position. Therefore, the solar concentration device of the present invention tracks all changes in the sun's altitude and position using the tilting motion of the concentration unit and the rotational motion of the device, thereby displaying high concentration efficiency. To prevent the rotational motion from influencing the output direction of the concentrated sunlight, the central axis of the device's rotation may be designed to match the central axis of the output path.

In the present invention, the solar concentration device may also include a driving unit to drive the device. The driving unit allows the concentration device to operate in response to changes in the sun's altitude and position, tracking sunlight based on the sun's characteristic to move a certain distance at a certain time.

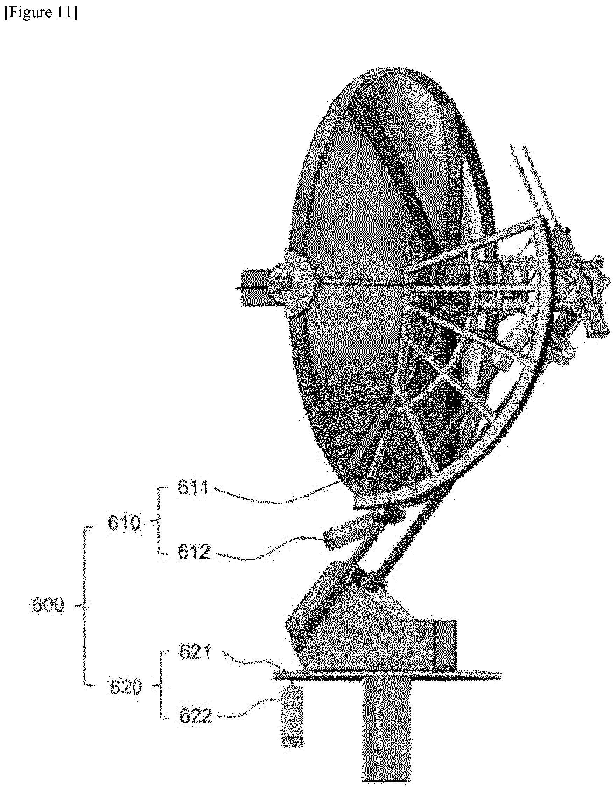

Figure 11 illustrates an exemplary structure of the solar concentration device including a driving unit. Referring to Figure 11, the driving unit (600) may include a gear (611) for tilting motion that responds to changes in the sun's altitude, and a motor (612) that includes a tilting module (610).

In the tilting module (610), the motor (612) may be connected to the gear (611) to provide power for tilting motion, and the power supplied by the gear (611) may cause the motor (612) to operate, resulting in tilting motion. Here, the gear (611) of the tilting module (610) may be a worm gear that includes a worm wheel and a worm, and between the tilting module (610) and the gear (611), a transmission for precise control may be placed. Specifically, the worm wheel may be installed at the rear of the incident light reflector (100b) of the concentration unit (100), and the axial rotation of the worm may cause the worm wheel to operate, resulting in tilting motion.

In addition, the driving unit (600) may also include a gear (621) for rotational motion responding to changes in the sun's position, and a rotational module (620) that includes a motor (622).

In the rotational module (620), the motor (622) may be connected to the gear (621) to provide power for rotational motion, and the power supplied by the motor (622) may cause the gear (621) to operate, resulting in rotational motion. Between the gear (621) and the motor (622), a transmission for precise control may be placed. Here, the gear (621) of the rotational module may be positioned at the bottom surface of the transmission unit (500) and installed as a form that surrounds the output path (530).

In one embodiment of the present invention, the operational errors of the driving unit (600) may be controlled by the signals of the optical sensor (130) of the concentration unit (100). This ensures that the incident light on the incident surface of the concentration unit is always direct sunlight, improving the solar concentration efficiency.

In one embodiment of the present invention, the solar concentration device may also include an inner frame unit.

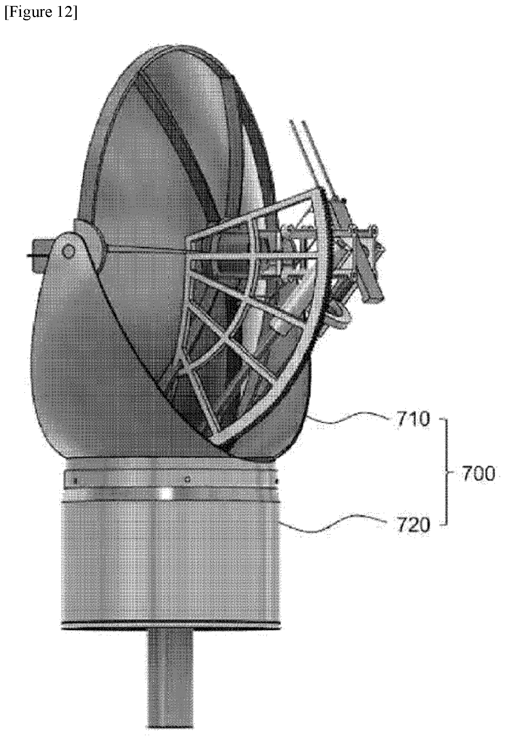

Figure 12 illustrates an exemplary structure of the solar concentration device that includes an inner frame unit. Referring to Figure 12, the inner frame unit (700) may include an upper frame (710) that supports the upper part of the device, and a lower frame (720) that supports the lower part of the device.

In the present invention, the upper frame (710) may have a form that is connected to each end of the central axis of the tilting of the incident light reflector (110) and covers the lower surface of the incident light reflector (110), and the lower frame (720) may have a form that surrounds members at the lower part of the device.

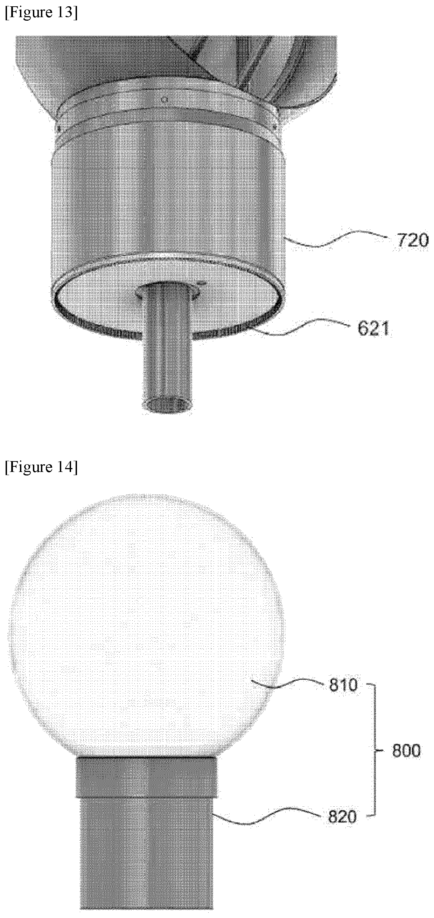

In one embodiment of the present invention, as illustrated in Figure 13, the gear (621) of the rotational module may be formed at the lower surface of the lower frame (720).

In one embodiment of the present invention, the solar concentration device may also include a protective frame unit to protect the device from the external environment.

Figure 14 illustrates the structure of a protective frame unit, and the protective frame unit (800) may include a spherical transparent case (810) that surrounds the upper part of the device and a supporting frame (820) that supports the transparent case (810) and surrounds the lower part of the device.

The transparent case (810) may be formed in a highly transparent material, such as glass, so it can protect the concentration unit (100) without disrupting the incidence of sunlight. In the present invention, since the tilting motion of the concentration unit (100) requires a narrow surface area, the device can be reduced to a compact size even when the transparent case (810) is attached to it.

The role of the supporting frame (820) is to secure and support the entire device, and members of electronic equipment may be installed at the lower part of the device and positioned inside the supporting frame. Here, the supporting frame (820) may be designed to release heat from the inside to the outside and enable temperature control and air circulation on the inside.

In one embodiment of the present invention, the solar concentration device may also include a cleaning unit that is rotatably attached to the outside of the transparent case (810) to clean the transparent case. The cleaning unit allows the device to clean the transparent case thoroughly and automatically without an additional cleaning process, thereby maintaining high solar incidence efficiency.

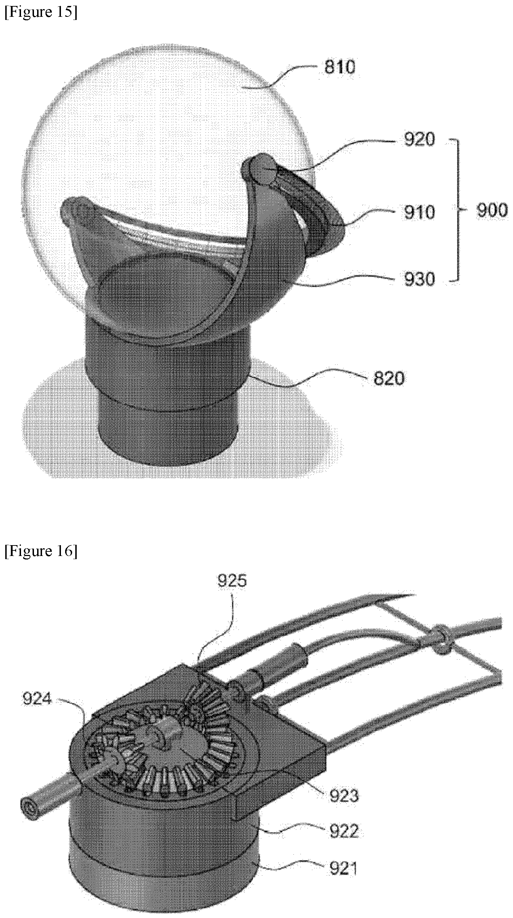

Figure 15 illustrates a perspective view of a structure in which a cleaning unit is attached to the transparent case of the protective frame unit. Referring to this, the cleaning unit (900) may include a rotational cleaning means (910) that can rotate along the outer surface of the transparent case (810), and a hinge (920) formed on the rotation axis of the rotational cleaning means (910), and may also include a connecting frame (930) that connects the hinge (920) of the cleaning unit to the supporting frame (820).

In the present invention, the rotational cleaning means (910) may comprise one or more of a brush and a resilient wiper. In one embodiment, the rotational cleaning means (910) may have a structure where a brush is positioned at the center, with a resilient wiper on each side of the brush. Therefore, the rotational cleaning means (910) can rotate closely along the outer peripheral surface of the transparent case (810) to perform a thorough cleaning and can minimize physical damage to the transparent case (810).

In the present invention, the cleaning unit (900) may include a cleaning module that allows the rotational cleaning means (910) to rotate along the transparent case (810), and additionally, also include an assisting cleaning module that enables the automatic rotation of the rotational cleaning means (910) to improve its cleaning efficiency.

Figure 16 illustrates a structure in which a cleaning module and an assisting cleaning module are installed in the hinge of the cleaning unit.

Referring to Figure 16, the hinge (920) of the cleaning unit may include a hinge rotation frame (922) that connects the hinge central frame (921), the rotational cleaning means (910), and the cleaning unit hinge (920), and a gear unit (923) positioned on the inside of the hinge rotation frame (922). The gear unit may include 8 spur gears at the lower part of the hinge rotation frame (922) and 24 bevel gears that are positioned on and operate in connection with the 8 spur gears, and a cleaning module gear (924) operating in connection with the 24 bevel gears and an assisting cleaning module gear (925) operating in connection with the 24 bevel gears may be positioned on the 24 bevel gears.

In the structure, the cleaning module gear (924) may be connected to the motor through a wire cable, and the assisting cleaning module gear (925) may be connected to the rotational cleaning means (910) through a wire cable. Here, a hole may be formed on the frame that covers the upper part of the hinge, to enable the rotation of the wire cable connected to the rotational cleaning means (910).

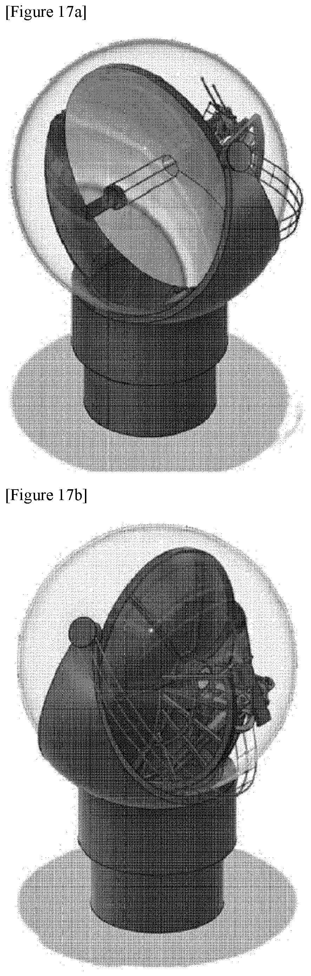

Figure 17 illustrates a front perspective view (a) and a rear perspective view (b) of the solar concentration device according to an exemplary embodiment of the present invention.

Referring to Figure 17, the solar concentration device according to one embodiment of the present invention may include a concentration unit, a tilting unit, a parallel light reflection unit, a slide frame unit, a transmission unit, a driving unit, an inner frame unit, a protective frame unit, and a cleaning unit. Since the solar concentration device according to the present invention enables high-efficiency concentration and requires an extremely narrow surface area for the tilting motion of the concentration unit, it enables the lightening and miniaturization of the device and requires low manufacturing and maintenance costs, which makes it economically advantageous. In addition, in the present invention, installing a protective frame unit that protects the entire device does not make a big difference in the device's size, and it is possible to maintain high concentration efficiency by installing a rotatable cleaning unit in the transparent case for automatic cleaning. In addition, as the device doesn't require an additional cleaning process or require the operator to go up to the rooftop, it is highly convenient to operate.

While specific parts of the content of the present invention have been described in detail, it will be apparent to those of ordinary skill in the art that such detailed descriptions are merely preferred embodiments and do not limit the scope of the present invention. Therefore, the true scope of the present invention should be defined by the appended claims and their equivalents.

## Claims

1. A solar concentration device comprising: a concentration unit that collects sunlight, converts it into parallel light, and delivers the parallel light to the parallel light reflection unit;
a tilting unit that includes two arm structures that adjust the angle of the concentration unit and are connected to one another through a hinge;
a parallel light reflection unit that is connected to the tilting unit through a hinge and reflects the parallel light delivered by the concentration unit to the transmission unit;
a slide frame unit to which the tilting unit is slidably attached;
a transmission unit to which one end of the slide frame unit is fixed and that transmits the parallel light reflected by the parallel light reflection unit to the outside to output sunlight; and
a tilting adjustment unit that connects the tilting unit and the parallel light reflection unit and enables the angle of the parallel light reflection unit to remain the same as the angle at which the parallel light is delivered to the transmission unit according to the sliding of the tilting unit;
wherein
the tilting unit, at the rear of the concentration unit, includes a first arm structure slidably attached to the concentration unit; and a second arm structure slidably attached to the slide frame unit,
the angle of the concentration unit is adjusted by the sliding according to the sliding frame unit of the tilting unit,
the parallel light reflection unit
includes a parallel light reflector that is connected to the tilting unit through a hinge structure and reflects parallel light onto the transmission unit; two extension rods extending parallelly from one end of the parallel light reflector; and a slide rod slidably attached along the two extension sticks,
and the tilting adjustment unit
connects at least one of the tilting unit or the concentration unit to the slide rod through a hinge structure, thereby ensuring that the angle of the parallel light reflection unit remains the same as the angle at which the parallel light is delivered to the transmission unit.

2. The solar concentration device of claim 1, wherein
the concentration unit
has a through-hole formed at the center, and includes an incident light reflector that includes a first parabolic mirror to concentrate sunlight;
and a concentration reflector that is positioned to face the mirror of the incident light reflector, and includes a second parabolic mirror to reflect the light concentrated by the incident light reflector toward the through-hole to deliver the parallel light to the parallel light reflection unit.

3. The solar concentration device of claim 2, wherein
the concentration unit
also includes a reflector-connecting means that connects the incident light reflector and the concentrator reflector;
and a tilting-unit-connecting means that is formed at the rear of the incident light reflector and to which the first arm structure is slidably attached.

4. The solar concentration device of claim 1, wherein
the concentration unit also includes an optical sensor that detects sunlight.

5. The solar concentration device of claim 1, wherein
the transmission unit
includes one or more reflectors to transmit the light reflected by the parallel light reflection unit toward the output direction.

6. The solar concentration device of claim 1, wherein
the device includes a driving unit for tilting motion that responds to changes in the sun's altitude and for rotational motion that responds to changes in the sun's position.

7. The solar concentration device of claim 1, wherein
the device also includes a protective frame unit that includes a transparent case surrounding the upper part of the device; and a supporting frame that supports the transparent case and surrounds the lower part of the device.

8. The solar concentration device of claim7, wherein
the device is rotatably attached to the outside of the transparent case and also includes a cleaning unit for cleaning the transparent case.
